# FASCICULE DE BREVET EUROPEEN

(11) **EP 2 614 661 B1**
(45) Date de publication et mention de la délivrance du brevet: **30.04.2014**
(21) Numéro de dépôt: 11754865.1
(22) Date de dépôt: 06.09.2011
(51) Int. Cl.: H04W 4/02, H04M 3/51

(54) **GESTION DE FONCTIONNEMENT D'UN CENTRE D'APPEL**
BETRIEBSFÜHRUNG EINES CALL-CENTERS
OPERATION MANAGEMENT OF A CALL CENTER

(30) Priorité: 06.09.2010 FR 1057045
(43) Date de publication de la demande: 17.07.2013
(73) Titulaire: Alcatel Lucent, 75007 Paris (FR)
(72) Inventeur: TAILLANT, Jean-Marc, F-29806 Brest (FR); ROUE, Sylvie, F-29806 Brest (FR)
(74) Mandataire: Mouney, Jérôme
(86) Numéro de dépôt international: PCT/EP2011/065407
(87) Numéro de publication internationale: WO 2012/032058

(56) Documents cités:
- US-A1- 2004 217 864
- US-A1- 2006 203 991
- TING J S L ET AL: "A Dynamic RFID-Based Mobile Monitoring System in Animal Care Management Over a Wireless Network", WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 septembre 2007 (2007-09-21), pages 2085-2088, XP031261694, ISBN: 978-1-4244-1311-9

## Description

La présente invention concerne la gestion de fonctionnement d'un centre d'appel, et plus particulièrement une surveillance de l'état des agents dépendant du centre d'appel.

Dans un centre d'appel, des agents ne sont pas toujours situés aux mêmes emplacements. Notamment, chaque agent peut s'attribuer un emplacement avec un terminal lorsqu'il arrive au travail, chaque agent ayant le choix entre les emplacements libres. Chaque agent peut se connecter à un serveur d'appel via n'importe quel terminal, à l'aide d'un identificateur et d'un mot de passe par exemple.

Un superviseur, étant par exemple un supérieur hiérarchique des agents et apte à se déplacer dans le centre d'appel, peut souhaiter surveiller l'état en temps réel de chaque agent ou de chaque groupe d'agents, l'état pouvant regrouper des informations sur une communication actuelle ou des statistiques.

Par ailleurs, le superviseur peut recevoir une alerte concernant un agent ou un groupe d'agents. Une telle alerte peut avoir disparue pendant le trajet entre le bureau du superviseur et l'agent ou le groupe d'agents relatif à l'alerte.

Il existe ainsi un besoin d'analyser en temps réel l'état d'un agent ou d'un groupe d'agents, par exemple en étant à proximité des agents, sans déranger les agents.

Un objectif de l'invention est de remédier aux inconvénients précédents en proposant un système permettant à un superviseur de surveiller en temps réel l'état des agents d'un centre d'appel, sans déranger les agents.

Pour atteindre cet objectif, un procédé de contrôle de l'état d'un agent rattaché à un centre d'appel dans lequel des zones géographiques sont respectivement associées à des identificateurs de zone géographique, des terminaux de communication sont respectivement associés à des zones géographiques, et au moins un serveur de centre d'appel est apte à communiquer avec un serveur de gestion de données et les terminaux de communication, comprend les étapes suivantes dans un terminal mobile d'un superviseur apte à se déplacer dans les zones géographiques :
déterminer un identificateur de la zone géographique dans laquelle est situé un agent qui est connecté au serveur de centre d'appel via un terminal de communication associé à ladite zone géographique,
transmettre une première requête comprenant l'identificateur de la zone géographique au serveur de gestion de données pour récupérer dans une première table de correspondance un identificateur de l'agent associé à l'identificateur de la zone géographique,
transmettre une deuxième requête comprenant l'identificateur de l'agent au serveur de centre d'appel pour récupérer dans une deuxième table de correspondance les données d'état de l'agent associées à l'identificateur de l'agent,
fournir au moins une partie des données d'état de l'agent récupérées au superviseur par visualisation graphique.

Avantageusement, un superviseur peut surveiller rapidement et en temps réel l'état des différents agents rattachés à un centre d'appel.

Selon une autre caractéristique de l'invention, suite à la connexion de l'agent au serveur de centre d'appel via le terminal de communication associé à la zone géographique, le serveur d'appel peut mémoriser un identificateur de l'agent en correspondance avec des données d'état de l'agent dans la deuxième table de correspondance, et mémoriser l'identificateur de l'agent en correspondance avec un identificateur de la zone géographique dans la première table de correspondance dans le serveur de gestion de données.

Selon une autre caractéristique de l'invention, l'identificateur de la zone géographique dans laquelle est situé l'agent peut être est déterminé en détectant la présence de cet identificateur dans la zone géographique.

Selon d'autres caractéristiques de l'invention, l'identificateur de la zone géographique peut être un ensemble de données de localisation, un ensemble de données d'identification par radiofréquence, ou encore un marqueur.

Selon une autre caractéristique de l'invention, les données d'état de l'agent peuvent comprendre des coordonnées de l'agent et une indication sur l'état de l'agent.

L'invention concerne également un terminal mobile pour le contrôle de l'état d'un agent rattaché à un centre d'appel dans lequel des zones géographiques sont respectivement associées à des identificateurs de zone géographique, des terminaux de communication sont respectivement associés à des zones géographiques, et au moins un serveur de centre d'appel est apte à communiquer avec un serveur de gestion de données et les terminaux de communication, ledit terminal mobile étant en possession d'un superviseur apte à se déplacer dans les zones géographiques et ledit terminal mobile comprenant :
des moyens pour déterminer l'identificateur de la zone géographique dans laquelle est situé un agent qui est connecté au serveur de centre d'appel via un terminal de communication associé à ladite zone géographique,
des moyens pour transmettre une première requête comprenant l'identificateur de la zone géographique au serveur de gestion de données pour récupérer dans une première table de correspondance un identificateur de l'agent associé à l'identificateur de la zone géographique,
des moyens pour transmettre une deuxième requête comprenant l'identificateur de l'agent au serveur de centre d'appel pour récupérer dans une deuxième table de correspondance les données d'état de l'agent associées à l'identificateur de l'agent, et
des moyens pour fournir au moins une partie des données d'état de l'agent récupérées au superviseur par visualisation graphique.

L'invention se rapporte encore à un programme d'ordinateur apte à être mis en oeuvre dans un terminal, ledit programme comprenant des instructions qui, lorsque le programme est exécuté dans ledit terminal, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention pour gérer le fonctionnement d'un centre d'appel ; et
- la figure 2 est un algorithme d'un procédé pour gérer le fonctionnement d'un centre d'appel selon une réalisation de l'invention.

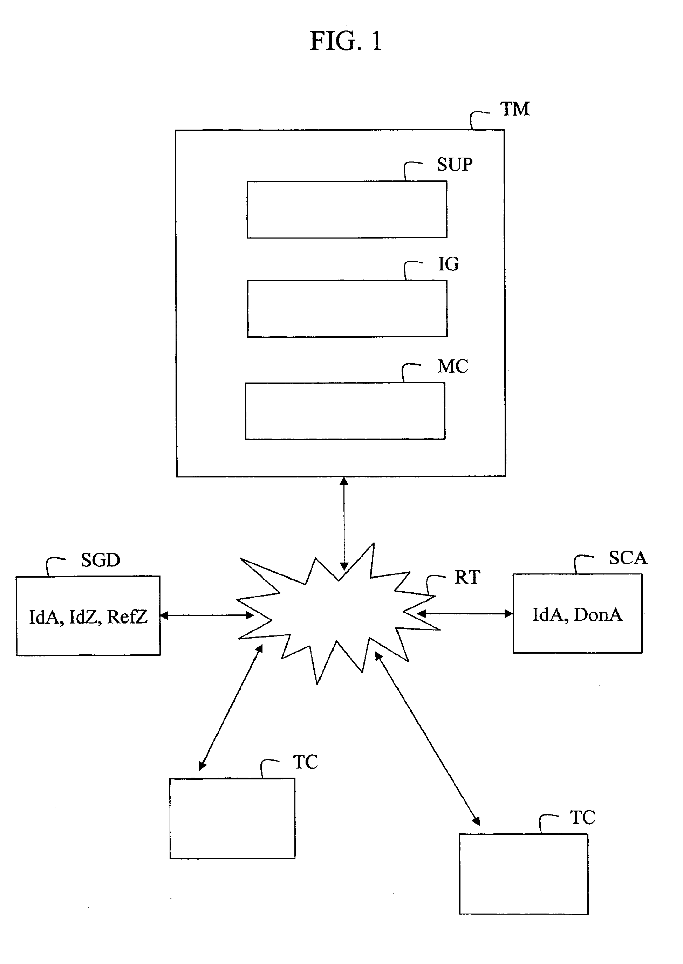

En référence à la figure 1, un système de communication selon l'invention comprend un réseau de télécommunications RT, au moins un serveur de centre d'appel SCA, un serveur de gestion de données SGD, un terminal mobile TM, et plusieurs terminaux de communication TC.

Le réseau de télécommunications RT peut comprendre un réseau sans fil, tel qu'un réseau de radiocommunication cellulaire numérique de type GSM ("Global System for Mobile communications" en anglais) ou UMTS ("Universal Mobile Telecommunications System" en anglais), ou encore un réseau sans fil de faible portée du type WLAN ("Wireless Local Area Network" en anlais) ou conforme à l'une des normes 802.1x, ou de moyenne portée selon le protocole WIMAX ("World wide Interoperability Microwave Access" en anglais).

Le réseau de télécommunications RT peut être connecté à un réseau de paquets de type IP ("Internet Protocol" en anglais). Par ailleurs, le réseau de télécommunications RT peut comprendre un réseau filaire ou être une combinaison de réseaux filaires et sans fil.

Le terminal mobile TM est en la possession d'un superviseur qui surveille en temps réel l'état d'agents travaillant pour un service de centre d'appel. Chaque agent peut utiliser librement un terminal de communication TC de son choix pour fournir le service de centre d'appel, le terminal de communication TC étant associé à une zone géographique. Plus particulièrement, le superviseur est apte à se déplacer à travers plusieurs zones géographiques, chaque zone géographique étant associé à un terminal de communication ou à plusieurs terminaux de communication.

Chacun des terminaux de communication TC peut être un ordinateur personnel ou un terminal intelligent pouvant communiquer avec le réseau de télécommunications RT par une liaison filaire ou sans fil. Chaque terminal de communication TC comprend des moyens pour établir une communication avec le serveur de centre d'appel SCA.

Selon un exemple, un terminal mobile TM est un terminal de radiocommunications cellulaire mobile, relié par un canal de radiocommunication à un réseau d'accès comprenant le réseau fixe d'un réseau de radiocommunications, par exemple de type GSM ou UMTS.

Selon un autre exemple, un terminal mobile TM comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), ou encore un ordinateur personnel, pouvant être relié à une borne d'accès d'un réseau sans fil de faible portée du type WLAN ou conforme à l'une des normes 802.1x, ou de moyenne portée selon le protocole WIMAX.

Le terminal mobile TM comprend un module de supervision SUP, un module de communication MC, et une interface graphique IG.

Dans la suite de la description, le terme module peut désigner un dispositif, un logiciel ou une combinaison de matériel informatique et de logiciel, configuré pour exécuter au moins une tâche particulière.

Le terminal mobile TM est apte à communiquer avec le serveur de centre d'appel SCA et le serveur de gestion de données SGD.

En particulier, le module de supervision SUP a pour fonctionnalité de détecter la présence d'un identificateur de la zone géographique, qui est associé à un ou plusieurs terminaux de communication TC et dans laquelle est situé un agent ou un groupe d'agents.

Le module de supervision SUP utilise les capacités du terminal mobile TM les plus adaptées pour cette fonctionnalité. Plusieurs technologies supportées par le terminal mobile peuvent être utilisées.

Selon un premier exemple, le terminal mobile peut être doté d'un moyen de capture d'image, tel qu'une caméra ou un appareil photographique pour prendre une capture d'image d'une zone géographique, afin de comparer un objet inclus dans l'image capturée à un objet modèle ou un marqueur ("marker" en anglais). Par exemple, le marqueur est un objet sensiblement plan comprenant des formes géométriques telles que des carrés et le terminal mobile est apte à reconnaître un tel marqueur dans une image capturée d'une zone géographique, le marqueur étant assimilé à un identificateur de la zone géographique.

Selon un deuxième exemple, le terminal mobile peut être doté d'un moyen de communication radio de courte portée pour identifier une zone géographique, tel qu'un lecteur RFID ("Radio Frequency IDenfication" en anglais) communiquant avec un badge RFID associé à la zone géographique, un ensemble de données RFID fournies par le badge RFID étant assimilé à un identificateur de la zone géographique.

Selon un troisième exemple, le terminal mobile peut être doté d'un moyen de géolocalisation utilisant un service de localisation du réseau de télécommunication ou un service de système de positionnement GPS ("Global Position System" en anglais). Chaque zone géographique comprend un élément de localisation transmettant un ensemble de données de localisation au service de localisation, ledit ensemble étant assimilé à un identificateur de la zone géographique. Dans ce cas, le terminal mobile comprend une interface graphique affichant par exemple la distance entre le terminal mobile et chaque zone géographique, chaque zone géographique étant automatiquement détectée par le service de localisation.

Le serveur de centre d'appel SCA mémorise une table de correspondance entre des identificateurs IdA des agents et des données d'état DonA relatives aux agents, et le serveur de gestion de données SGD mémorise une table de correspondance entre des identificateurs IdA des agents et des référence RefZ des zones géographiques. Chaque zone géographique peut être associée à un terminal de communication ou à plusieurs terminaux de communication.

Par exemple, lorsqu'un agent se connecte au serveur de centre d'appel SCA via un terminal de communication TC, ce dernier transmet au serveur SCA des informations comprenant des données d'état DonA de l'agent, un identificateur IdA de l'agent et une référence RefZ de la zone géographique associée au terminal de communication TC.

L'agent se connecte au serveur de centre d'appel SCA via le terminal de communication TC au moyen d'un identificateur et d'un mot de passe, et le serveur de centre d'appel SCA mémorise un identificateur IdA de l'agent en correspondance avec des données d'état DonA de l'agent, et met à jour régulièrement les données d'état de l'agent dans la table de correspondance. Les données d'état DonA relatives à un agent comprennent par exemple la durée d'un appel en cours traité par l'agent, le nombre d'appels traités et la progression de l'agent sur ses objectifs.

Le serveur de gestion de données SGD, sous la commande du serveur de centre d'appel SCA, mémorise l'identificateur IdA de l'agent en correspondance avec la référence RefZ de la zone géographique. Par ailleurs, le serveur de gestion de données SGD contient une autre table de correspondance entre les références RefZ des zones géographiques et des identificateurs IdZ des zones géographiques, un identificateur IdZ pouvant être un marqueur, ou un ensemble de données de localisation, ou encore un ensemble de données RFID, et une référence RefZ pouvant être une chaîne de caractères définissant la zone géographique correspondante.

En variante, lorsqu'un agent se connecte au serveur de centre d'appel SCA via un terminal de communication TC, ce dernier transmet au serveur SCA des informations comprenant des données d'état DonA de l'agent, un identificateur IdA de l'agent et un identificateur IdZ de la zone géographique associée au terminal de communication TC, et le serveur de gestion de données SGD, sous la commande du serveur de centre d'appel SCA, mémorise l'identificateur IdA de l'agent en correspondance avec l'identificateur IdZ de la zone géographique.

Dans tous les cas, le serveur de gestion de données SGD a en mémoire une table de correspondance comprenant des identificateurs IdA d'agents respectivement associés à des identificateurs IdZ de zones géographiques.

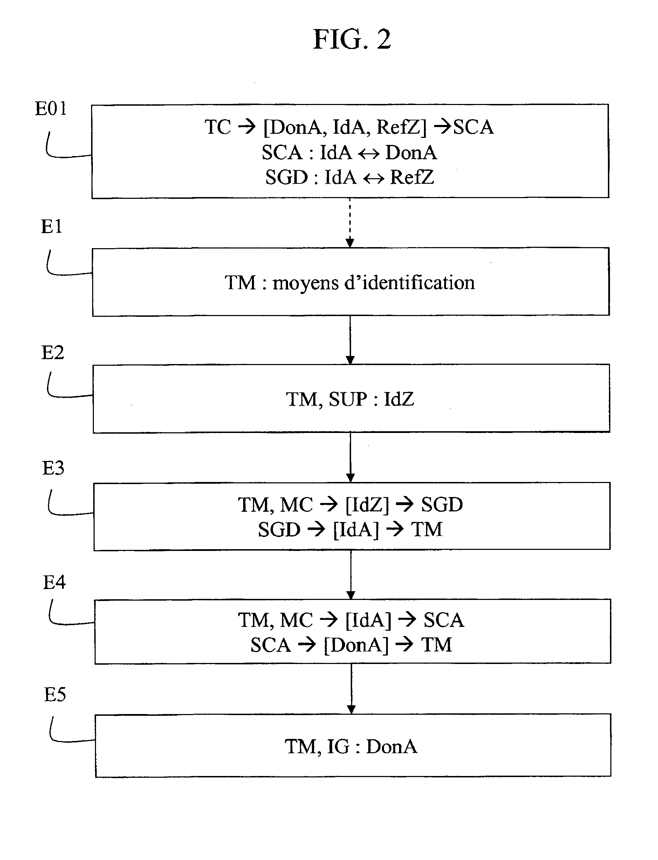

En référence à la figure 2, un procédé pour gérer le fonctionnement d'un centre d'appel selon une réalisation de l'invention comprend des étapes E1 à E5 exécutées dans le système de communication.

A une étape préliminaire E01, des agents choisissent chacun un terminal de communication TC et se connectent au serveur de centre d'appel SCA via le terminal choisi. Pour chaque agent connecté au serveur de centre d'appel SCA via un terminal de communication TC, le serveur SCA récupère des informations comprenant des données d'état DonA de l'agent, un identificateur IdA de l'agent et une référence RefZ de la zone associée au terminal de communication TC.

Ainsi, chaque agent est associé à un terminal de communication TC qui est lui-même associé à une zone géographique.

Le serveur de centre d'appel SCA produit et mémorise une table de correspondance entre des identificateurs IdA des agents et des données d'état DonA relatives aux agents, et commande au serveur de gestion de données SGD la mémorisation d'une table de correspondance entre des identificateurs IdA des agents et des références RefZ des zones géographiques.

A l'étape E1, le superviseur dote son terminal mobile TM de moyens d'identification de zones géographiques ou met à jour ces derniers. Par exemple, le terminal mobile TM télécharge depuis le serveur de gestion de données SGD un ensemble de marqueurs qui sont associés aux zones géographiques ou un ensemble de données RFID permettant de communiquer avec des badges RFID.

A l'étape E2, le superviseur se déplace dans les zones géographiques pour surveiller l'état des agents. Lorsque le superviseur est au voisinage d'une zone géographique dans lequel est situé un agent connecté au serveur de centre d'appel SCA, le module de supervision SUP du terminal mobile TM du superviseur détermine l'identificateur IdZ de la zone géographique dans laquelle est situé l'agent.

Notamment, le terminal mobile TM du superviseur détecte automatiquement la présence de cet identificateur IdZ dans la zone géographique dans laquelle est situé l'agent, lorsque le superviseur est à proximité de cet identificateur.

Par exemple, une caméra du terminal mobile prend une capture d'image de la zone géographique et identifie automatiquement un marqueur placé dans la zone géographique, par exemple sur une table supportant le terminal de communication, le marqueur étant assimilé à un identificateur de la zone géographique. Le marqueur est détecté automatiquement si le superviseur est suffisamment proche du marqueur pour que la résolution de l'image de la zone géographique permette d'identifier le marqueur, par exemple d'une distance de l'ordre de quelques mètres du marqueur.

Selon un autre exemple, un lecteur RFID inclus dans le terminal mobile communique automatiquement avec un badge RFID associé à la zone géographique, lorsque le terminal mobile est suffisamment proche du badge RFID, le badge RFID étant assimilé à un identificateur de la zone géographique. Le badge RFID est ainsi automatiquement détecté si le terminal mobile se trouve à une distance de l'ordre de quelques centimètres du badge RFID.

A l'étape E3, le module de communication MC du terminal mobile TM transmet une première requête comprenant l'identificateur IdZ de la zone géographique au serveur de gestion de données SGD afin que ce dernier identifie dans une table de correspondance l'identificateur IdA de l'agent associé à l'identificateur IdZ de la zone géographique et transmette l'identificateur IdA de l'agent au terminal mobile TM.

Dans une réalisation, le serveur de gestion de données SGD identifie dans une table de correspondance la référence RefZ de la zone géographique associée à l'identificateur IdZ de la zone géographique, puis l'identificateur IdA de l'agent associé à la référence RefZ.

A l'étape E4, le module de communication MC du terminal mobile TM transmet une deuxième requête l'identificateur IdA de l'agent au serveur de centre d'appel SCA afin que ce dernier identifie dans une table de correspondance des données d'état DonA relatives à l'agent associé à l'identificateur IdA de l'agent et transmette des données d'état DonA de l'agent au terminal mobile TM.

A l'étape E5, le terminal mobile TM fournit au moins une partie des données d'état DonA de l'agent au superviseur par visualisation graphique au moyen de l'interface graphique IG.

Par exemple, le terminal mobile affiche des coordonnées de l'agent, telles que ses nom et prénom, et affiche une indication sur l'état de l'agent à partir des données d'état DonA relatives à l'agent.

A titre d'exemple, ladite indication peut comprendre un signal lumineux de couleur rouge si l'agent rencontre un problème ou de couleur verte si l'agent n'a pas de problème particulier. Ladite indication peut en outre comprendre une partie des données d'état DonA relatives à l'agent comprennent, telles que la durée d'un appel en cours traité par l'agent et le nombre d'appels déjà traités par l'agent, ou peut comprendre un lien à sélectionner vers cette partie des données.

L'invention décrite ici concerne un procédé et un terminal mobile pour gérer le fonctionnement d'un centre d'appel. Selon une implémentation de l'invention, les étapes du procédé de l'invention sont déterminées par les instructions d'un programme d'ordinateur incorporé dans un terminal, tel que le terminal mobile TM. Le programme comporte des instructions de programme, qui lorsque ledit programme est chargé et exécuté dans le terminal, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé de contrôle de l'état d'un agent rattaché à un centre d'appel dans lequel des zones géographiques sont respectivement associées à des identificateurs (IdZ) de zone géographique, des terminaux de communication (TC) sont respectivement associés à des zones géographiques, et au moins un serveur de centre d'appel (SCA) est apte à communiquer avec un serveur de gestion de données (SGD) et les terminaux de communication (TC), le procédé comprenant les étapes suivantes dans un terminal mobile (TM) d'un superviseur apte à se déplacer dans les zones géographiques :
déterminer (E2) un identificateur (IdZ) de la zone géographique dans laquelle est situé un agent qui est connecté au serveur de centre d'appel (SCA) via un terminal de communication (TC) associé à ladite zone géographique,
transmettre (E3) une première requête comprenant l'identificateur (IdZ) de la zone géographique au serveur de gestion de données (SGD) pour récupérer dans une première table de correspondance un identificateur (IdA) de l'agent associé à l'identificateur (IdZ) de la zone géographique,
transmettre (E4) une deuxième requête comprenant l'identificateur (IdA) de l'agent au serveur de centre d'appel (SCA) pour récupérer dans une deuxième table de correspondance les données d'état (DonA) de l'agent associées à l'identificateur de l'agent (IdA),
fournir (E5) au moins une partie des données d'état (DonA) de l'agent récupérées au superviseur par visualisation graphique.

2. Procédé conforme à la revendication 1, selon lequel, suite à la connexion de l'agent au serveur de centre d'appel (SCA) via le terminal de communication (TC) associé à la zone géographique, le serveur d'appel mémorise un identificateur de l'agent (IdA) en correspondance avec des données d'état (DonA) de l'agent dans la deuxième table de correspondance, et mémorise l'identificateur de l'agent (IdA) en correspondance avec un identificateur (IdZ) de la zone géographique dans la première table de correspondance dans le serveur de gestion de données (SGD).

3. Procédé conforme à la revendication 1 ou 2, selon lequel l'identificateur (IdZ) de la zone géographique dans laquelle est situé l'agent est déterminé en détectant la présence de cet identificateur (IdZ) dans la zone géographique.

4. Procédé conforme à la revendication 3, selon lequel l'identificateur de la zone géographique est un marqueur.

5. Procédé conforme à la revendication 3, selon lequel l'identificateur de la zone géographique est un ensemble de données d'identification par radiofréquence.

6. Procédé conforme à la revendication 1 ou 2, selon lequel l'identificateur de la zone géographique est un ensemble de données de localisation.

7. Procédé conforme à l'une des revendications 1 à 6, selon lequel les données d'état (DonA) de l'agent comprennent des coordonnées de l'agent et une indication sur l'état de l'agent.

8. Terminal mobile (TM) pour le contrôle de l'état d'un agent rattaché à un centre d'appel dans lequel des zones géographiques sont respectivement associées à des identificateurs (IdZ) de zone géographique, des terminaux de communication (TC) sont respectivement associés à des zones géographiques, et au moins un serveur de centre d'appel (SCA) est apte à communiquer avec un serveur de gestion de données (SGD) et les terminaux de communication, ledit terminal mobile étant en possession d'un superviseur apte à se déplacer dans les zones géographiques et ledit terminal mobile comprenant :
des moyens (SUP) pour déterminer l'identificateur (IdZ) de la zone géographique dans laquelle est situé un agent qui est connecté au serveur de centre d'appel (SCA) via un terminal de communication (TC) associé à ladite zone géographique,
des moyens (MC) pour transmettre une première requête comprenant l'identificateur (IdZ) de la zone géographique au serveur de gestion de données (SGD) pour récupérer dans une première table de correspondance un identificateur (IdA) de l'agent associé à l'identificateur (IdZ) de la zone géographique,
des moyens (MC) pour transmettre une deuxième requête comprenant l'identificateur (IdA) de l'agent au serveur de centre d'appel (SCA) pour récupérer dans une deuxième table de correspondance les données d'état (DonA) de l'agent associées à l'identificateur de l'agent (IdA), et
des moyens (IG) pour fournir au moins une partie des données d'état (DonA) de l'agent récupérées au superviseur par visualisation graphique.

9. Programme d'ordinateur apte à être mis en oeuvre dans un terminal mobile pour le contrôle de l'état d'un agent rattaché à un centre d'appel dans lequel des zones géographiques sont respectivement associées à des identificateurs (IdZ) de zone géographique, des terminaux de communication (TC) sont respectivement associés à des zones géographiques, et au moins un serveur de centre d'appel (SCA) est apte à communiquer avec un serveur de gestion de données (SGD) et les terminaux de communication, ledit programme comprenant des instructions qui, lorsque le programme est chargé et exécuté dans ledit terminal mobile, réalisent les étapes suivantes, le terminal mobile (TM) étant en possession d'un superviseur apte à se déplacer dans les zones géographiques :
déterminer (E2) un identificateur (IdZ) de la zone géographique dans laquelle est situé l'agent,
transmettre (E3) une première requête comprenant l'identificateur (IdZ) de la zone géographique au serveur de gestion de données (SGD) pour récupérer dans une première table de correspondance un identificateur (IdA) de l'agent associé à l'identificateur (IdZ) de la zone géographique,
transmettre (E4) une deuxième requête comprenant l'identificateur (IdA) de l'agent au serveur de centre d'appel (SCA) pour récupérer dans une deuxième table de correspondance les données d'état (DonA) de l'agent associées à l'identificateur de l'agent (IdA),
fournir (E5) au moins une partie des données d'état (DonA) de l'agent récupérées au superviseur par visualisation graphique.

## Patentansprüche

1. Verfahren zur Steuerung des Zustands eines an eine Anrufzentrale angebundenen Agenten, wobei die geografischen Zonen jeweils mit Kennungen (IdZ) der geografischen Zonen assoziiert sind, wobei Kommunikationsendgeräte (TC) jeweils mit geografischen Zonen assoziiert sind, und wobei mindestens ein Anrufzentralen-Server (SCA) für die Kommunikation mit einem Datenverwaitungsserver (SGD) und den Kommunikationsendgeräten (TC) geeignet ist, wobei das Verfahren die folgenden Schritte in einem mobilen Endgerät (TM) eines Aufsehers, welcher fähig ist, sich in den geografischen Zonen zu bewegen, umfasst:
Ermitteln (E2) einer Kennung (IdZ) der geografischen Zone, in welcher sich ein über ein mit der besagten geografischen Zone assoziiertes Kommunikationsendgerät (TC) mit dem Anrufzentralen-Server (SCA) verbundener Agent befindet,
Übertragen (E3) einer ersten Anforderung, welche die Kennung (IdZ) der geografischen Zone enthält, an den Datenverwaltungsserver (SGD), um in einer ersten Korrespondenztabelle eine Kennung (IdA) des mit der Kennung (IdZ) der geographischen Zone assoziierten Agenten zu erfassen,
Übertragen (E4) einer zweiten Anforderung, welche die Kennung (IdA) des Agenten enthält, an den Anrufzentralen-Server (SCA), um in einer zweiten Korrespondenztabelle die Zustandsdaten (DonA) des mit der Kennung des Agenten (IdA) assoziierten Agenten zu erfassen,
Bereitstellen (E5) mindestens eines Teils der erfassten Zustandsdaten (DonA) des Agenten durch graphische Visualisierung an den Aufseher.

2. Verfahren nach Anspruch 1, wobei der Anrufserver im Anschluss an die Verbindung des Agenten mit dem Anrufzentralen-Server (SCA) über das mit der geografischen Zone assoziierte Kommunikationsendgerät (TC) eine Kennung des Agenten (IdA) in Übereinstimmung mit Zustandsdaten (DonA) des Agenten in der zweiten Korrespondenztabelle speichert und die Kennung des Agenten (IdA) in Übereinstimmung mit einer Kennung (IdZ) der geografischen Zone in der ersten Korrespondenztabelle im Datenverwaltungsserver (SGD) speichert.

3. Verfahren nach Anspruch 1 oder 2, wobei die Kennung (IdZ) der geografischen Zone, in welcher sich der Agent befindet, durch Detektieren der Präsenz dieser Kennung (IdZ) in der geografischen Zone ermittelt wird.

4. Verfahren nach Anspruch 3, wobei die Kennung der geografischen Zone ein Markierer ist.

5. Verfahren nach Anspruch 3, wobei die Kennung der geografischen Zone ein Satz von Identifikationsdaten über Funkfrequenz ist.

6. Verfahren nach Anspruch 1 oder 2, wobei die Kennung der geografischen Zone ein Satz von Standortdaten ist.

7. Verfahren nach einem der Ansprüche 1 bis 6, wobei die Zustandsdaten (DonA) des Agenten Koordinaten des Agenten und eine Angabe über den Zustand des Agenten umfassen.

8. Mobiles Endgerät (TM) zur Steuerung des Zustands eines an eine Anrufzentrale angebundenen Agenten, wobei die geografischen Zonen jeweils mit Kennungen (IdZ) der geografischen Zonen assoziiert sind, wobei Kommunikationsendgeräte (TC) jeweils mit geografischen Zonen assoziiert sind, und wobei mindestens ein Anrufzentralen-Server (SCA) für die Kommunikation mit einem Datenverwaltungsserver (SGD) und den Kommunikationsendgeräten geeignet ist, wobei das mobile Endgerät in Besitz eines Aufsehers ist, welcher fähig ist, sich in den geografischen Zonen zu bewegen, und wobei das mobile Endgerät umfasst:
Mittel (SUP) zum Ermitteln der Kennung (IdZ) der geografischen Zone, in welcher sich ein über ein mit der besagten geografischen Zone assoziiertes Kommunikationsendgerät (TC) mit dem Anrufzentralen-Server (SCA) verbundener Agent befindet,
Mittel (MC) zum Übertragen einer ersten Anforderung, welche die Kennung (IdZ) der geografischen Zone enthält, an den Datenverwaltungsserver (SGD), um in einer ersten Korrespondenztabelle eine Kennung (IdA) des mit der Kennung (IdZ) der geographischen Zone assoziierten Agenten zu erfassen,
Mittel (MC) zum Übertragen einer zweiten Anforderung, welche die Kennung (IdA) des Agenten enthält, an den Anrufzentralen-Server (SCA), um in einer zweiten Korrespondenztabelle die Zustandsdaten (DonA) des mit der Kennung des Agenten (IdA) assoziierten Agenten zu erfassen,
Mittel (IG) zum Bereitstellen mindestens eines Teils der erfassten Zustandsdaten (DonA) des Agenten durch graphische Visualisierung an den Aufseher.

9. Computerprogramm, geeignet für die Ausführung in einem mobilen Endgerät zur Steuerung des Zustands eines an eine Anrufzentrale angebundenen Agenten, wobei die geografischen Zonen jeweils mit Kennungen (IdZ) der geografischen Zonen assoziiert sind, wobei Kommunikationsendgeräte (TC) jeweils mit geografischen Zonen assoziiert sind, und wobei mindestens ein Anrufzentralen-Server (SCA) für die Kommunikation mit einem Datenverwaltungsserver (SGD) und den Kommunikationsendgeräten geeignet ist, wobei das Programm Befehle umfasst, welche, wenn das Programm in dem besagten mobilen Endgerät geladen ist und aufgeführt wird, die folgenden Schritte durchführen, wobei das mobile Endgerät (TM) in Besitz eines Aufsehers ist, welcher fähig ist, sich in den geografischen Zonen zu bewegen,
Ermitteln (E2) einer Kennung (IdZ) der geografischen Zone, in welcher sich der Agent befindet,
Übertragen (E3) einer ersten Anforderung, welche die Kennung (IdZ) der geografischen Zone enthält, an den Datenverwaltungsserver (SGD), um in einer ersten Korrespondenztabelle eine Kennung (IdA) des mit der Kennung (IdZ) der geographischen Zone assoziierten Agenten zu erfassen,
Übertragen (E4) einer zweiten Anforderung, welche die Kennung (IdA) des Agenten enthält, an den Anrufzentralen-Server (SCA), um in einer zweiten Korrespondenztabelle die Zustandsdaten (DonA) des mit der Kennung des Agenten (IdA) assoziierten Agenten zu erfassen,
Bereitstellen (E5) mindestens eines Teils der erfassten Zustandsdaten (DonA) des Agenten durch graphische Visualisierung an den Aufseher.

## Claims

1. A method for checking the status of an agent assigned to a call center within which geographic areas are respectively associated with geographic area identifiers (IdZ), communication terminals (TC) are respectively associated with geographic areas, and at least one call center server (SCA) is capable of communicating with a data management server (SGD) and communication terminals (TC), which method comprises the following steps in a mobile terminal (TM) of a supervisor capable of moving within the geographic areas:
determining (E2) an identifier (IdZ) of the geographic area in which an agent connected to the call center server (SCA) via a communication terminal (TC) associated with said geographic area is located,
transmitting (E3) a first request comprising the geographic area's identifier (IdZ) to the data management server (SGD) in order to retrieve within a first lookup table an identifier (IdA) of the agent associated with the identifier (IdZ) of the geographic area,
transmitting (E4) a second request comprising the agent's identifier (IdA) to the call center server (SCA) in order to retrieve within a second lookup table the agent's status data (DonA) associated with the agent's identifier (IdA),
providing (E5) at least some of the agent's retrieved status data (DonA) to the supervisor through a graphical display.

2. A method according to claim 1, wherein, after the agent connects to the call center server (SCA) via the communication terminal (TC) associated with the geographic area, the call server saves an identifier of the agent (IdA) as a match for the agent's status data (DonA) within the second lookup table, and saves the agent's identifier (IdA) as a match for the geographic area's identifier (IdZ) within the first lockup table within the data management server (SGD).

3. A method according to claim 1 or 2, wherein the geographic area's identifier (IdZ) in which the agent is located is determined by detecting that identifier's (IdZ) presence within the geographic area.

4. A method according to claim 3, wherein the geographic area's identifier is a marker.

5. A method according to claim 3, wherein the geographic area's identifier is a radio identification data set.

6. A method according to claim 1 or 2, wherein the geographic area's identifier is a location data set.

7. A method according to any one of the claim 1 to 6, wherein the agent's status data (DonA) comprise the agent's contact information and an indication about the agent's status.

8. A mobile terminal (TM) for checking the status of an agent assigned to a call center in which geographic areas are respectively associated with geographic area identifiers (IdZ), communication terminals (TC) are respectively associated with geographic areas, and at least one call center server (SCA) is capable of communicating with a data management server (SGD) and communication terminals, said mobile terminal being in the possession of a supervisor capable of moving within the geographic areas and said mobile terminal comprising:
means (SUP) for determining the identifier (IdZ) of the geographic area in which an agent who is connected to the call center server (SCA) via a communication terminal (TC) associated with said geographic area is located,
means (MC) for transmitting a first request comprising the geographic area's identifier (IdZ) to the data management server (SGD) in order to retrieve within a first lookup table an identifier (IdA) of the agent associated with the identifier (IdZ) of the geographic area,
means (MC) for transmitting a second request comprising the agent's identifier (IdA) to the call center server (SCA) in order to retrieve within a second lookup table the agent's status data (DonA) associated with the agent's identifier (IdA), and
means (IG) for providing at least some of the agent's retrieved status data to the supervisor through a graphical display.

9. A computer program capable of being implemented within a mobile terminal for checking the status of an agent assigned to a call center in which geographic areas are respectively associated with identifiers (IdZ) of geographic areas, communication terminals (TC) are respectively associated with geographic areas, and at least one call center server (SCA) is capable of communicating with a data management server (SGD) and communication terminals, said program comprising instructions that, when the program is loaded and executed within said mobile terminal, carry out the following steps, the mobile terminal (TM) being in the possession of a supervisor capable of moving within the geographic areas:
determining (E2) an identifier (IdZ) of the geographic area in which the agent is located,
transmitting (E3) a first request comprising the geographic area's identifier (IdZ) to the data management server (SGD) in order to retrieve within a first lookup table an identifier (IdA) of the agent associated with the identifier (IdZ) of the geographic area,
transmitting (E4) a second request comprising the agent's identifier (IdA) to the call center server (SCA) in order to retrieve within a second lookup table the agent's status data (DonA) associated with the agent's identifier (IdA),
providing (E5) at least some of the agent's retrieved status data (DonA) to the supervisor through a graphical display.
